# EUROPÄISCHE PATENTSCHRIFT

(11) **EP 3 799 006 B1**
(45) Veröffentlichungstag und Bekanntmachung des Hinweises auf die Patenterteilung: **10.06.2026**
(21) Anmeldenummer: 19200180.8
(22) Anmeldetag: 27.09.2019
(51) Int. Cl.: G08G 1/01, G06V 20/54, G08G 1/04, G08G 1/017

(54) **VERFAHREN UND SYSTEM ZUM ERSTELLEN VON BEWEGUNGSPROFILEN, VERKEHRSNETZ**
METHOD AND SYSTEM FOR PRODUCING MOVEMENT PROFILES, TRAFFIC NETWORK
PROCÉDÉ ET SYSTÈME DE CRÉATION DE PROFILS DE MOUVEMENT, RÉSEAU DE COMMUNICATIONS

(43) Veröffentlichungstag der Anmeldung: 31.03.2021
(73) Patentinhaber: VITRONIC Dr.-Ing. Stein Bildverarbeitungssysteme GmbH, 65189 Wiesbaden (DE)
(72) Erfinder: DIETER, Jochen, 65189 Wiesbaden (DE); MINGE, Bernhard, 65232 Taunusstein (DE); BISSÉ, Tim, 65195 Wiesbaden (DE)
(74) Vertreter: Neumann Müller Oberwalleney Patentanwälte PartG mbB

(56) Entgegenhaltungen:
- EP-A1- 2 838 075
- WO-A1-2017/015297
- US-A1- 2016 104 357
- US-A1- 2018 211 116

## Beschreibung

Die Erfindung betrifft ein Verfahren und ein System zum Erstellen von Bewegungsprofilen von Verkehrsteilnehmern in einem Verkehrsnetz mit mindestens zwei Erfassungsstationen, wobei Bilddaten der Verkehrsteilnehmer mit Sensoren der Erfassungsstationen erfasst und mit einer Auswertungsvorrichtung ausgewertet werden, wobei Datensätze mit Merkmaldaten der Verkehrsteilnehmer aus den Bilddaten erstellt werden und wobei die Datensätze verschiedener Erfassungsstationen verglichen werden.

Derartige Verfahren kommen beispielsweise bei einer Überwachung von Tempolimits im Straßenverkehr mittels sogenannter Abschnittskontrolle zum Einsatz, bei der nicht die Geschwindigkeit an einem bestimmten Punkt gemessen wird, sondern die Durchschnittsgeschwindigkeit über eine längere Strecke zwischen zwei Erfassungsstationen ermittelt wird.

Aus der EP 2 838 075 A1 ist ein Verfahren zur Erfassung von Überschreitungen einer zulässigen Höchstgeschwindigkeit auf einem Streckenabschnitt einer Fahrbahn bekannt, bei dem das Passieren eines Fahrzeugs an einer ersten Station detektiert wird und ein Datensatz zum Fahrzeug in der ersten Station gespeichert wird. Das Passieren des besagten Fahrzeugs an einer in Fahrtrichtung hinter der ersten Station angeordneten zweiten Station wird detektiert und es wird ein Datensatz zum Fahrzeug in der zweiten Station gespeichert. Anhand der Entfernung zwischen der ersten Station und der zweiten Station sowie der Zeitdifferenz zwischen dem Detektieren des Passierens der ersten Station und dem Detektieren des Passierens der zweiten Station wird die Durchschnittsgeschwindigkeit über den Streckenabschnitt zwischen der ersten Station und der zweiten Station ermittelt. Rechtlichen Anforderungen an den Datenschutz erfordern, dass die Datensätze vor der Übertragung verschlüsselt werden und dass nur diejenigen Datensätze aus den Stationen abrufbar sind und entschlüsselt werden können, die einer Überschreitung der zulässigen Höchstgeschwindigkeit zugeordnet wurden. Eine Verwendung der übrigen Datensätze ist nicht vorgesehen.

Eine Aufgabe der Erfindung besteht darin, ein Verfahren und ein System der eingangs genannten Art vorzuschlagen, bei denen die Datensätze mit Merkmaldaten der Verkehrsteilnehmer zum Erstellen von Bewegungsprofilen der Verkehrsteilnehmer in einem Verkehrsnetz genutzt werden.

US 2016/104357 A1 offenbart ein Verfahren zum Erstellen von Bewegungsprofilen von Verkehrsteilnehmern.

Die Aufgabe wird erfindungsgemäß durch ein Verfahren nach Anspruch 1 und ein System nach Anspruch 8 gelöst. Bevorzugte Ausführungsformen ergeben sich aus den abhängigen Ansprüchen.

Bei dem erfindungsgemäßen Verfahren ist vorgesehen, dass bei einer Übereinstimmung der Merkmaldaten zweier Datensätze eine Plausibilität dafür, dass die zwei Datensätze ein und demselben Verkehrsteilnehmer zugeordnet sind, unter Berücksichtigung von den Datensätzen zugeordneten Informationen über einen jeweiligen Ort und eine jeweilige Zeit des Erfassens der Bilddaten ermittelt wird und wobei bei einem ausreichenden Wert der ermittelten Plausibilität ein Bewegungsprofil des Verkehrsteilnehmers erstellt wird.

Ein Vorteil des Verfahrens besteht darin, dass durch das Ermitteln der Plausibilität, zusätzlich zu dem Vergleich der Datensätze, es ermöglicht wird, nicht eindeutige Merkmaldaten der Datensätze einem Verkehrsteilnehmer zuzuordnen. Die nicht eindeutigen Merkmaldaten der Datensätze können dadurch vorteilhaft so wenig Information enthalten, dass zum Beispiel keine personenbezogene Zuordnung möglich ist. So können Anforderungen des Datenschutzes erfüllt werden und sämtliche Datensätze stehen grundsätzlich für das Erstellen von Bewegungsprofilen der Verkehrsteilnehmer zur Verfügung. Die Plausibilität wird anhand der den Datensätzen zugeordneten Informationen über den jeweiligen Ort und die jeweilige Zeit des Erfassens der Bilddaten ermittelt, also ebenfalls vorteilhaft anhand von nicht personenbezogenen Daten.

Das Verfahren lässt sich vorteilhaft in verschiedenen Verkehrsnetzen einsetzen, wobei es sich beispielsweise um ein städtisches oder überregionales Straßennetz handelt.

Die Verkehrsteilnehmer sind dabei insbesondere Fahrzeuge. Grundsätzlich ist das Verfahren auch auf Personen in einem öffentlichen Transportnetz oder einem Fußgängerbereich als Verkehrsnetz anwendbar. Erfassungsstationen im Sinne der Erfindung sind Einrichtungen, an denen Bilddaten der Verkehrsteilnehmer mit Sensoren aufgezeichnet werden. Die Erfassungsstationen sind in der Regel stationär. Zwei Erfassungsstationen erlauben das Erstellen von Bewegungsprofilen der Verkehrsteilnehmer zwischen diesen zwei Stationen. Vorzugsweise sind mehr als zwei Erfassungsstationen in dem Verkehrsnetz vorgesehen. Die Auswertungsvorrichtung im Sinne der Erfindung ist eine Vorrichtung zur Datenverarbeitung, welche eine Auswertung der durch die Sensoren aufgezeichneten digitalen Bilddaten erlaubt. Durch die Auswertevorrichtung werden die Datensätze mit den Merkmaldaten der Verkehrsteilnehmer erstellt und gespeichert. Merkmaldaten der Verkehrsteilnehmer sind im Sinne der Erfindung Daten, welche eine Wiedererkennung ein und desselben Verkehrsteilnehmers durch Vergleich von zwei Datensätzen grundsätzlich ermöglichen. Dabei ist im Sinne der Erfindung jedoch insbesondere keine eindeutige Identifizierbarkeit des Verkehrsteilnehmers anhand der Merkmaldaten vorgesehen. Unter der Übereinstimmung der Merkmaldaten zweier Datensätze ist im Sinne der Erfindung daher insbesondere eine teilweise Übereinstimmung der Merkmaldaten oder eine Ähnlichkeit der Merkmaldaten zu verstehen. Beispielsweise können als Merkmaldaten eines Fahrzeugs als Verkehrsteilnehmer dessen Farbe und dessen Länge in dem Datensatz gespeichert sein.

Die Plausibilität im Sinne der Erfindung ist ein Maß, welches angibt, ob zwei Datensätze mit übereinstimmenden Merkmaldaten ein und demselben Verkehrsteilnehmer zugeordnet werden können, also aus Bilddaten desselben Verkehrsteilnehmers erstellt wurden. Die Plausibilität ist beispielsweise ein binärer Wert, der entweder angibt, dass die übereinstimmenden Merkmaldaten aus Bilddaten desselben Verkehrsteilnehmers erstellt wurden, oder dass dies nicht der Fall ist. Alternativ kann die Plausibilität ein Wahrscheinlichkeitswert sein, welcher angibt, mit welcher Wahrscheinlichkeit die übereinstimmenden Merkmaldaten aus Bilddaten desselben Verkehrsteilnehmers erstellt wurden. Ein ausreichender Wert der ermittelten Plausibilität ist im Sinne der Erfindung ein vorgegebener Grenzwert, den die Plausibilität mindestens erreichen muss, damit die zwei Datensätze mit übereinstimmenden Merkmaldaten zur Erstellung des Bewegungsprofils des Verkehrsteilnehmers herangezogen werden.

Zur Ermittlung der Plausibilität werden den Datensätzen zugeordnete Informationen über einen jeweiligen Ort und eine jeweilige Zeit des Erfassens der Bilddaten verwendet. Als Ort wird die Position der jeweiligen Erfassungsstation, an welcher die Bilddaten aufgezeichnet wurden, in dem Verkehrsnetz verstanden. Aus den Orten zweier Erfassungsstationen ergibt sich eine Entfernung und anhand der Zeiten, zu denen die jeweiligen Bilddaten aufgezeichnet wurden, lässt sich beispielsweise eine Geschwindigkeit ermitteln, mit welcher ein Verkehrsteilnehmer sich bewegt, wenn die die übereinstimmenden Merkmaldaten tatsächlich aus Bilddaten desselben Verkehrsteilnehmers erstellt wurden. Der so berechneten Geschwindigkeit lässt sich beispielsweise eine Plausibilität anhand einer Zuordnungstabelle zuordnen. So kann beispielsweise bei physikalisch unerreichbar hohen Geschwindigkeiten eine Plausibilität mit dem niedrigsten möglichen Wert zugeordnet werden. Selbiges gilt für zu niedrige Geschwindigkeiten, bei denen, selbst wenn die Daten tatsächlich von ein und demselben Verkehrsteilnehmer stammen, die Datensätze nicht geeignet sind, ein Bewegungsprofil des Verkehrsteilnehmers zu erstellen, da dieser gegebenenfalls nicht auf direktem Weg von einer Erfassungsstation zu der nächsten gelangt ist, oder zwischenzeitlich für längere Zeit bewegungslos geblieben ist.

Der Fachmann erkennt, dass das vorgeschlagene Verfahren vorteilhaft nicht darauf angewiesen ist, den Verkehr in dem Verkehrsnetz lückenlos zu überwachen oder jeden Verkehrsteilnehmer zu erkennen oder wiederzuerkennen. Um aus den Bewegungsprofilen Rückschlüsse auf den Verkehrsfluss zu ziehen, reicht es aus, zu einem Teil der Verkehrsteilnehmer ein Bewegungsprofil zu erstellen, beispielsweise zu zehn Prozent der Verkehrsteilnehmer. Datensätze, zu denen innerhalb einer bestimmten Zeit kein weiterer Datensatz mit übereinstimmenden Merkmaldaten gefunden wird, können gelöscht werden, da der Verkehrsteilnehmer beispielsweise bewegungslos ist, das Verkehrsnetz ohne erneute Erfassung verlassen hat oder nicht erfasst werden konnte.

Gemäß der Erfindung werden bei der Ermittlung der Plausibilität den Datensätzen zugeordnete Informationen über eine Fahrtrichtung es jeweiligen Verkehrsteilnehmers während des Erfassens der Bilddaten berücksichtigt. Wenn die Erfassungsstation, an welcher die Bilddaten später aufgenommen wurden, in der Fahrtrichtung des Verkehrsteilnehmers angeordnet ist, kann die Plausibilität vorteilhaft erhöht werden, da es zu erwarten ist, dass der fragliche Verkehrsteilnehmer auch die nächste in seiner Fahrtrichtung angeordnete Erfassungsstation passieren wird. Weiterhin bevorzugt wird die Plausibilität zusätzlich unter Berücksichtigung eines Grads der Übereinstimmung der Merkmaldaten der Datensätze ermittelt. Schließlich werden weiterhin bevorzugt die Merkmaldaten anhand einer Gewichtung bewertet. Bestimmte Merkmaldaten können vorteilhaft höher gewichtet werden, wenn diese für die Plausibilität eine größere Aussagekraft aufweisen. So trägt eine übereinstimmende Fahrzeugfarbe des Verkehrsteilnehmers wenig dazu bei, die Plausibilität zu erhöhen, wohingegen eine Übereinstimmung beispielsweise einer Seitenbeschriftung auf eine höhere Plausibilität schließen lässt. Umgekehrt führt aber eine nicht übereinstimmende Fahrzeugfarbe bei ansonsten großer Übereinstimmung anderer Merkmaldaten zu einer Reduzierung der Plausibilität, beispielsweise auf Null.

Ein Vorteil des Verfahrens besteht darin, dass die Datensätze nur derartige Merkmaldaten der Verkehrsteilnehmer beinhalten können, welche eine unspezifische Zuordnung ermöglicht. Auf die Speicherung und Verarbeitung von Daten, welche eine beispielsweise persönliche Zuordnung zu Personen kann unterbleiben, um das Verfahren geltenden Datenschutzbestimmungen konform anwenden zu können.

Ein weiterer Aspekt der Erfindung betrifft ein System zum Erstellen von Bewegungsprofilen von Verkehrsteilnehmern nach dem zuvor beschriebenen Verfahren. Das System weist mindestens zwei Erfassungsstationen in einem Verkehrsnetz auf, wobei jede Erfassungsstation mindestens einen Sensor zum Erfassen der Bilddaten der Verkehrsteilnehmer aufweist, wobei mindestens eine Auswertungsvorrichtung zum Auswerten der Bilddaten vorgesehen ist, sowie mindestens eine Kommunikationsverbindung zum Übertragen von Daten.

Als Sensor zum Erfassen der Bilddaten kann vorteilhaft ein bildgebender Sensor verwendet werden, insbesondere ein optischer Sensor. Die Sensoren umfassen vorzugsweise eine oder mehrere der folgenden Sensorarten: eine Kamera, ein 3D-Laserscanner, ein Radar.

Gemäß einer Ausführungsform des Systems ist eine zentrale Verarbeitungsstation vorgesehen, wobei die zentrale Verarbeitungsstation über die Kommunikationsverbindung mit den Erfassungsstationen verbunden ist. Die zentrale Verarbeitungsstation weist eine Datenverarbeitungsvorrichtung auf, die dazu eingerichtet ist, die Datensätze verschiedener Erfassungsstationen zu vergleichen und bei einer Übereinstimmung der Merkmaldaten zweier Datensätze die Plausibilität zu ermitteln, dass die zwei Datensätze ein und demselben Verkehrsteilnehmer zugeordnet sind.

Gemäß einer weiteren Ausführungsform des Systems sind mehrere dezentrale Verarbeitungsstationen vorgesehen, wobei die dezentralen Verarbeitungsstationen über die Kommunikationsverbindung mit jeweils mindestens zwei der Erfassungsstationen verbunden sind und wobei die dezentralen Verarbeitungsstationen jeweils eine Datenverarbeitungsvorrichtung aufweisen, die dazu eingerichtet ist, die Datensätze verschiedener Erfassungsstationen zu vergleichen und bei einer Übereinstimmung der Merkmaldaten zweier Datensätze die Plausibilität zu ermitteln, dass die zwei Datensätze ein und demselben Verkehrsteilnehmer zugeordnet sind.

Ein weiterer Aspekt der Erfindung betrifft ein mehrdimensionales Verkehrsnetz mit dem zuvor beschriebenen System.

Nachfolgend wird die Erfindung anhand eines Ausführungsbeispiels mit Bezug auf die beigefügten Zeichnungen näher erläutert. Die Ausführungen beziehen sich auf das erfindungsgemäße Verfahren ebenso, wie auf das erfindungsgemäße System.

Es zeigen
Figur 1 ein mehrdimensionales Verkehrsnetz mit einem Ausführungsbeispiel eines erfindungsgemäßen Systems zum Erstellen von Bewegungsprofilen von Verkehrsteilnehmern zu einem ersten Zeitpunkt;
Figur 2 das mehrdimensionale Verkehrsnetz gemäß Anspruch 1 zu einem zweiten Zeitpunkt;
Figur 3 Beispiele für nach dem erfindungsgemäßen Verfahren erstellte Bewegungsprofile von Verkehrsteilnehmern in dem mehrdimensionalen Verkehrsnetz gemäß Figur 1.

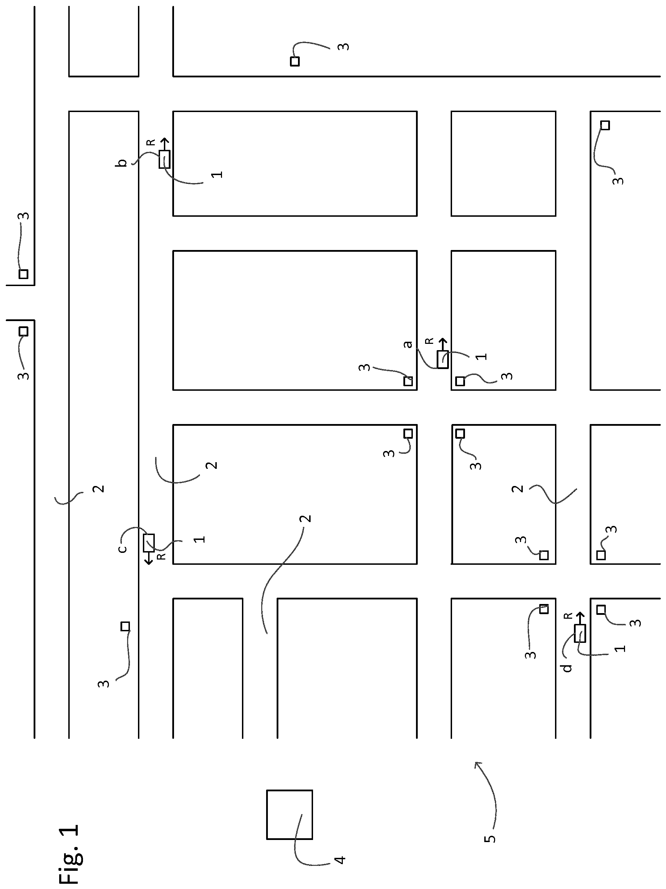

Die Figur 1 zeigt schematisch ein mehrdimensionales Verkehrsnetz 5 mit mehreren Erfassungsstationen 3, wobei jede Erfassungsstation 3 mindestens einen Sensor (nicht dargestellt), also beispielsweise eine Kamera, einen 3D-Laserscanner oder ein Radar aufweist, um Bilddaten von Verkehrsteilnehmern 1 zu erfassen. Die Bilddaten werden mit einer nicht dargestellten Auswertungsvorrichtung ausgewertet, wobei die Auswertungsvorrichtung in der jeweiligen Erfassungsstation 3 angeordnet sein kann oder in einer zentrale Verarbeitungsstation 4. Weiterhin ist mindestens eine nicht dargestellte Kommunikationsverbindung zum Übertragen von Daten vorgesehen. Die zentrale Verarbeitungsstation 4 ist insbesondere über die Kommunikationsverbindung mit den Erfassungsstationen 3 verbunden. Alternativ können mehrere dezentrale Verarbeitungsstationen (nicht dargestellt) vorgesehen sein, wobei die dezentralen Verarbeitungsstationen über die Kommunikationsverbindung mit jeweils mindestens zwei der Erfassungsstationen 3 verbunden sind.

Durch die Auswertevorrichtungen werden Datensätze mit Merkmaldaten der Verkehrsteilnehmer 3 aus den Bilddaten erstellt. Die zentrale Verarbeitungsstation 4, oder alternativ mehrere dezentrale Verarbeitungsstationen, weisen eine Datenverarbeitungsvorrichtung auf, die dazu eingerichtet ist, die Datensätze verschiedener Erfassungsstationen 3 zu vergleichen. Bei einer Übereinstimmung der Merkmaldaten zweier Datensätze wird dann eine Plausibilität dafür ermittelt, dass die zwei Datensätze ein und demselben Verkehrsteilnehmer 1 zugeordnet sind. Dabei werden den Datensätzen zugeordneten Informationen über einen jeweiligen Ort und eine jeweilige Zeit des Erfassens der Bilddaten berücksichtigt. Bei einem ausreichenden Wert der ermittelten Plausibilität wird dann ein Bewegungsprofil 6 des Verkehrsteilnehmers 1 erstellt.

Insbesondere wird die Plausibilität ermittelt, indem ein erster Ort festgestellt wird, an dem die Bilddaten für einen ersten der zwei Datensätze aufgenommen wurden und ein zweiter Ort festgestellt wird, an dem die Bilddaten für einen zweiten der zwei Datensätze aufgenommen wurden, wobei eine erste Zeit festgestellt wird, zu der die Bilddaten für den ersten der zwei Datensätze aufgenommen wurden und eine zweite Zeit festgestellt wird, zu der die Bilddaten für den zweiten der zwei Datensätze aufgenommen wurden, wobei aus einer Entfernung zwischen dem ersten Ort und dem zweiten Ort und einer Zeitdifferenz zwischen der ersten Zeit und der zweiten Zeit eine Geschwindigkeit des Verkehrsteilnehmers 1 berechnet wird. Zusätzlich können bei der Ermittlung der Plausibilität den Datensätzen zugeordnete Informationen über eine Fahrtrichtung R des jeweiligen Verkehrsteilnehmers 1 während des Erfassens der Bilddaten berücksichtigt werden. Die Plausibilität kann vorteilhaft zusätzlich unter Berücksichtigung eines Grads der Übereinstimmung der Merkmaldaten der Datensätze ermittelt werden. Das Verfahren erlaubt vorteilhaft, dass die Datensätze nur derartige Merkmaldaten der Verkehrsteilnehmer beinhalten, welche eine unspezifische Zuordnung von Fahrzeugen ermöglicht, also beispielsweise das Fahrzeugmodell, einen Fahrzeugtyp, gegebenenfalls eine Beschriftung oder grafische Gestaltung oder die Fahrzeugfarbe. Derartige Merkmaldaten erlauben ein wiedererkennen des Fahrzeugs, nicht jedoch eine eindeutige Zuordnung oder Identifizierung des Verkehrsteilnehmers. Denkbar ist auch, eine Kodierung eines Zulassungsbezirks oder eines Zulassungslands aus den Bilddaten auszulesen, ohne das gesamte Kennzeichen oder die gesamten Registrierungsdaten auszulesen. Die Merkmaldaten werden weiterhin vorzugsweise anhand einer Gewichtung bewertet, so dass eine Übereinstimmung einer Beschriftung beispielsweise mit einer höheren Plausibilität bewertet wird, als eine übereinstimmende Fahrzeugfarbe. Auch können bestimmt Merkmaldaten eine so geringe Gewichtung erhalten, dass sie nicht in die Bewertung eingehen, wie beispielsweise eine Fahrzeugfarbe, welche auf ein Taxi schließen lässt. Wenn innerhalb einer vorbestimmten Zeit kein Datensatz mit übereinstimmenden Merkmaldaten gefunden wird, kann der Datensatz gelöscht werden. Merkmaldaten zur ein-ein-deutigen Erkennung der Verkehrsteilnehmer, wie z. B. die Fahrzeugkennzeichen, werden nicht erfasst. Die Verkehrsteilnehmer können auch nur stichprobenhaft erfasst werden. Somit lassen sich vorteilhaft Datenschutzauflagen für Personen gewährleisten, da beispielsweise keine personenbeziehbaren Daten erfasst werden.

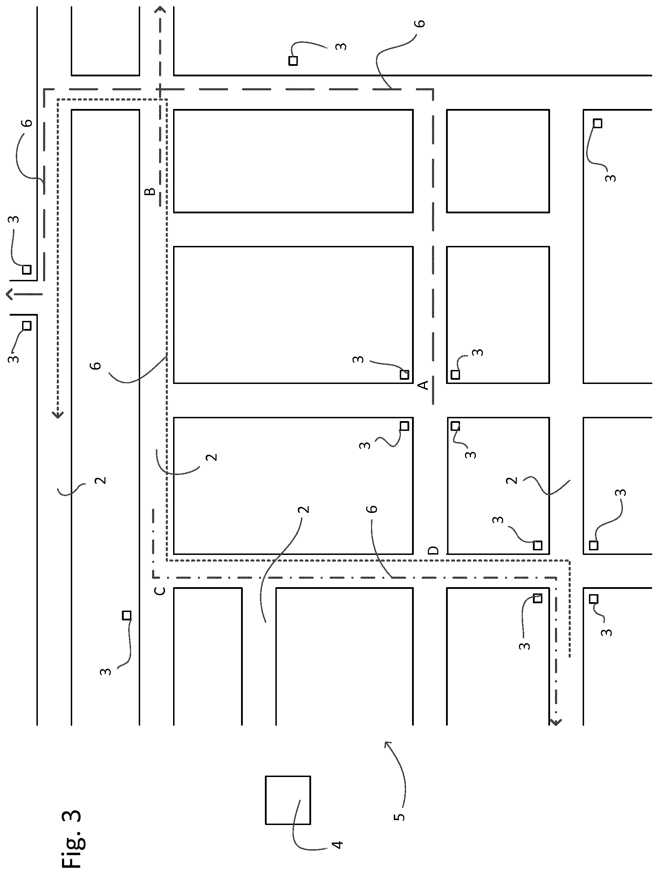

Aus übereinstimmenden Datensätzen verschiedener Erfassungsstationen 3 wird eine örtliche und zeitliche Korrelation zu einer Bewegung der Verkehrsteilnehmer 1 in dem Verkehrsnetz 5 erstellt, wobei es ausreichend ist, einen Teil der Verkehrsteilnehmer 1 zu erfassen. Damit ein Passieren einer Erfassungsstation 3 durch einen Verkehrsteilnehmer 1 erfasst werden kann, werden die erstellten Datensätze der verteilten Erfassungsstationen 3 über ein nicht dargestelltes Netzwerk an die zentrale Verarbeitungsstation 4 gesendet, wo die Datensätze miteinander verglichen und ausgewertet werden. Durch das Erfassen ein und desselben Verkehrsteilnehmers 1 an mehreren Erfassungsstationen 3 lassen sich Bewegungsprofile 6 (Figur 3) einzelner Fahrzeuge 1 erstellen. Alternativ können auch einzelne Erfassungsstationen 3 mit ihrer jeweils benachbarten Erfassungsstation 3 oder auch mit mehreren Erfassungsstationen 3 in der Umgebung oder auch mit allen Erfassungsstationen 3 in einem Verkehrsnetz 5 über ein Kommunikationsnetzwerk verbunden sein und die Datensätze austauschen, wobei der Vergleich der Datensätze einzelner oder mehrerer Erfassungsstationen 3 stattfindet.

Anhand der Bewegungsprofile 6 lassen sich vorteilhaft Verkehrsanalysen erstellen und Reisezeitermittlungen durchführen. Eine aktuelle Verkehrslage kann ermittelt werden und die Bewegungsprofile 6 können dafür genutzt werden, um eine zukünftige Verkehrslage aus der aktuellen Verkehrslage zu prädizieren.

Alle Rohdaten, also insbesondere die aufgenommenen Bilddaten werden in flüchtigen Speichern gehalten und nach der Erstellung der Datensätze direkt in dem flüchtigen Speicher wieder gelöscht. Es werden nur nicht personenbeziehbare Daten für die Weiterverarbeitung gespeichert bzw. an die zentrale Verarbeitungsstation 4 gesendet.

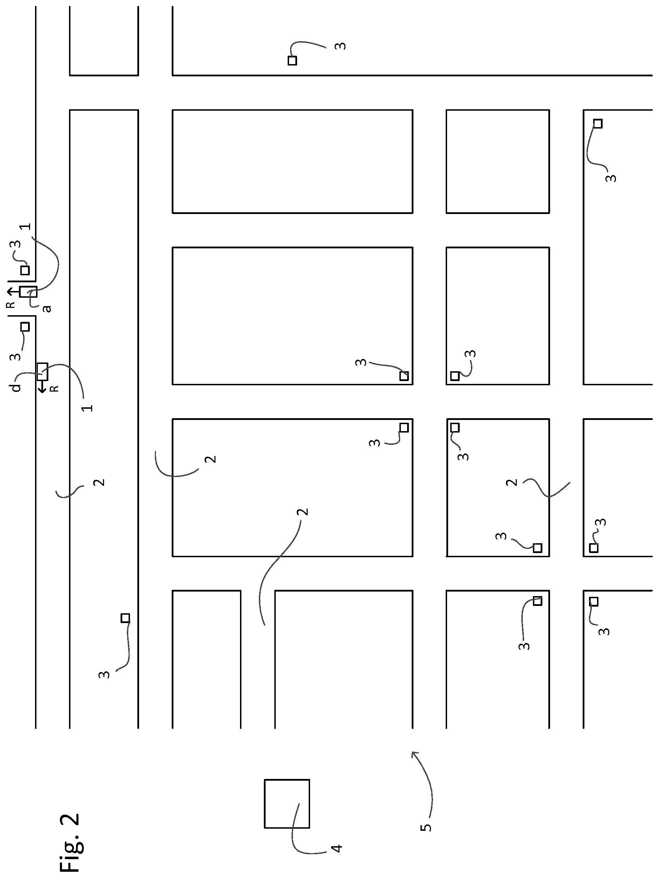

In den Figuren 1 und 2 ist jeweils eine Verkehrssituation in dem Verkehrsnetz 5 mit einzelnen Erfassungsstationen 3 zu zwei unterschiedlichen Zeitpunkten mit einer Zeitdifferenz von etwa zwei Minuten in einer schematischen Ansicht dargestellt. Das nicht geschlossene Verkehrsnetz 5 ist beispielsweise ein Teilgebiet eines Stadtgebiets. Die Verkehrsteilnehmer 1 sind beispielsweise Fahrzeuge a, b, c, d, welche in verschiedene, durch Richtungspfeile angegebene Richtungen R auf Fahrbahnen 2 fahren. An Kreuzungen der Fahrbahnen 2 können die Erfassungsstationen 3 beispielsweise an Ampelmasten montiert werden. Oder die Erfassungsstationen 3 sind z. B. an Laternenmasten angebracht. Alternativ können auch temporär mobile Erfassungsstationen 3 installiert und eingesetzt werden oder es können auch mobile Erfassungsstationen 3, die sich im Straßenverkehr bewegen, zum Einsatz kommen. Die Erfassungsstationen 3 beinhalten in diesem Ausführungsbeispiel jeweils eine Kamera. Die Erfassungsstationen 3 können jedoch auch mit 3D-Laserscannern ausgestattet sein.

Die Kameras, die sich in den Erfassungsstationen 3 befinden, nehmen Bilder von den Verkehrsteilnehmern1, also den vorbeifahrenden Fahrzeugen a, b, c, d innerhalb des Verkehrsnetzes 5 auf. Es werden die Merkmaldaten der Verkehrsteilnehmer 1 aus den Bilddaten erstellt. Ein Datensatz mit den Merkmaldaten wird für jeden erfassten Verkehrsteilnehmer 1 erstellt. Dieser beinhaltet Fahrzeugmerkmale, wie das Fahrzeugmodell, den Fahrzeugtyp, also PKW, LKW, Transporter oder Motorrad, gegebenenfalls eine Fahrzeugbeschriftung, ein Organisationslogo und/oder die Fahrzeugfarbe. Das Fahrzeugkennzeichen und ein Fahrerfoto werden bewusst nicht aus den Bilddaten extrahiert. Die Original-Bildaufnahmen werden nach der Erstellung des Datensatzes direkt wieder aus dem flüchtigen Speicher gelöscht und nur der Datensatz mit den Merkmaldaten wird an die zentrale Verarbeitungsstation 4 gesendet, beispielsweise über Funk. Anschließend kann die Verarbeitungsstation 4 aus den Datensätzen mit Merkmaldaten aller Erfassungsstationen 3 die Bewegungsprofile 6 der Verkehrsteilnehmer 1 innerhalb eines bestimmten Zeitraums erstellen.

In der Figur 3 sind die Bewegungsprofile A, B, C, D der Fahrzeuge a, b, c, d aus den Figuren 1 und 2 innerhalb des Zeitraums von zwei Minuten gezeigt. Das Fahrzeug a hat eine bestimmte Strecke A, gezeigt als grobe gestrichelte Linie, Richtung Norden zurückgelegt. Das Fahrzeug a wird dabei, wie in der Figur 1 gezeigt, von einer der Erfassungsstationen 3 erfasst und zwei Minuten später, wie in der Figur 2 gezeigt, von einer anderen der Erfassungsstationen 3 erfasst. Die kürzeste Fahrstrecke zwischen beiden Erfassungsstationen beträgt beispielsweise 850 Meter. Wenn das Fahrzeug a dieser Strecke folgt, was nicht bekannt ist, würde sich eine Fahrgeschwindigkeit für das Fahrzeug a von durchschnittlich etwa 25 Kilometer pro Stunde ergeben. Eine im Stadtverkehr realistische Fortbewegungsgeschwindigkeit wird nach dem Verfahren mit einer hohen Plausibilität bewertet. Wäre das Fahrzeug a in der Figur 1 beispielsweise in entgegengesetzter Richtung gefahren, kann dieser Umstand berücksichtigt werden. Die Fahrstrecke wäre dann länger, beispielsweise doppelt so lang. Eine sich daraus ergebende Durchschnittsgeschwindigkeit von 50 Kilometer pro Stunde wäre in einem Stadtgebiet zwar noch möglich, aber deutlich weniger plausibel. Das Fahrzeug d hat die Strecke D mit der fein gestrichelten Linie zurückgelegt. Die Fahrzeuge b, c sind in Figur 2 nicht mehr zu erkennen, da sich diese Fahrzeuge b, c nach zwei Minuten beispielsweise aus dem dargestellten Verkehrsnetz 5 herausbewegt haben. Das Bewegungsprofil C des Fahrzeugs c ist als Strich-Punkt-Linie zwar eingezeichnet, kann aber von dem System nicht erstellt werden, da das Fahrzeug c lediglich eine Kreuzung mit Erfassungsstationen 3 passiert, bevor es das Verkehrsnetz 5 verlässt. Selbiges gilt für das Bewegungsprofil B, da das Fahrzeug b gar nicht erfasst wird. Die erstellten Bewegungsprofile A, D können mit anderen, hier nicht gezeigten Bewegungsprofilen aus anderen Verkehrsnetzen, beispielsweise in Nachbarstädten, kombiniert werden, woraus dann ein dynamisches und nachhaltiges Verkehrsraummanagementsystem erstellt werden kann, wobei die Privatsphäre der Fahrzeugführer und/oder der Fahrzeughalter gewahrt bleibt und anonymisierte Bewegungsprofile 6 von Verkehrsteilnehmern 1 erstellt werden.

### Bezugszeichenliste

- 1: Verkehrsteilnehmer
- 2: Fahrbahn
- 3: Erfassungsstation
- 4: Zentrale Verarbeitungsstation
- 5: Verkehrsnetz
- 6: Bewegungsprofil
- R: Richtungspfeil
- a, b, c, d: Fahrzeuge als Verkehrsteilnehmer
- A, B, C, D: Bewegungsprofile der Fahrzeuge

## Patentansprüche

1. Verfahren zum Erstellen von Bewegungsprofilen von Verkehrsteilnehmern in einem Verkehrsnetz (5) mit mehr als zwei Erfassungsstationen (3),
wobei Bilddaten der Verkehrsteilnehmer (1) mit Sensoren der Erfassungsstationen erfasst und mit einer Auswertungsvorrichtung ausgewertet werden,
wobei Datensätze mit Merkmaldaten der Verkehrsteilnehmer aus den Bilddaten erstellt werden und wobei die Datensätze verschiedener Erfassungsstationen verglichen werden,
wobei bei einer Übereinstimmung der Merkmaldaten zweier Datensätze eine Plausibilität dafür, dass die zwei Datensätze ein und demselben Verkehrsteilnehmer zugeordnet sind, unter Berücksichtigung von den Datensätzen zugeordneten Informationen über einen jeweiligen Ort und eine jeweilige Zeit des Erfassens der Bilddaten ermittelt wird und wobei bei einem ausreichenden Wert der ermittelten Plausibilität ein Bewegungsprofil (6) des Verkehrsteilnehmers (1) erstellt wird,
**dadurch gekennzeichnet, dass** die Plausibilität unter Berücksichtigung von den Datensätzen zugeordneten Informationen über eine Fahrtrichtung des Verkehrsteilnehmers während des Erfassens der Bilddaten ermittelt wird.

2. Verfahren nach Anspruch 1, wobei die Plausibilität unter Berücksichtigung einer Geschwindigkeit des Verkehrsteilnehmers ermittelt wird, indem ein erster Ort festgestellt wird, an dem die Bilddaten für einen ersten der zwei Datensätze aufgenommen wurden und ein zweiter Ort festgestellt wird, an dem die Bilddaten für einen zweiten der zwei Datensätze aufgenommen wurden, wobei eine erste Zeit festgestellt wird, zu der die Bilddaten für den ersten der zwei Datensätze aufgenommen wurden und eine zweite Zeit festgestellt wird, zu der die Bilddaten für den zweiten der zwei Datensätze aufgenommen wurden, wobei aus einer Entfernung zwischen dem ersten Ort und dem zweiten Ort und einer Zeitdifferenz zwischen der ersten Zeit und der zweiten Zeit die Geschwindigkeit des Verkehrsteilnehmers berechnet wird.

3. Verfahren nach einem der vorhergehenden Ansprüche, wobei
die Plausibilität unter Berücksichtigung eines Grads der Übereinstimmung der Merkmaldaten der Datensätze ermittelt wird.

4. Verfahren nach Anspruch 3, wobei
die Merkmaldaten anhand einer Gewichtung bewertet werden.

5. Verfahren nach einem der vorhergehenden Ansprüche, wobei
die Datensätze nur derartige Merkmaldaten der Verkehrsteilnehmer beinhalten, welche eine unspezifische Zuordnung von Fahrzeugen ermöglicht, wobei die Merkmaldaten der Verkehrsteilnehmer, welche eine unspezifische Zuordnung von Fahrzeugen ermöglichen das Fahrzeugmodell, einen Fahrzeugtyp, eine Beschriftung oder grafische Gestaltung oder die Fahrzeugfarbe beinhalten.

6. Verfahren nach einem der vorhergehenden Ansprüche, wobei
die Datensätze mindestens eines der folgenden Merkmaldaten der Verkehrsteilnehmer beinhalten: Fahrzeugmodell, Fahrzeugtyp, Beschriftung, grafische Gestaltung, Kodierung eines Zulassungsbezirks, Kodierung eines Zulassungslands, Fahrzeugfarbe.

7. Verfahren nach einem der vorhergehenden Ansprüche, wobei
alle Datensätze, zu denen innerhalb einer vorbestimmten Zeit kein Datensatz mit übereinstimmenden Merkmaldaten gefunden wird, gelöscht werden.

8. System zum Erstellen von Bewegungsprofilen (6) von Verkehrsteilnehmern (1) nach dem Verfahren gemäß einem der vorhergehenden Ansprüche, aufweisend mehr als zwei Erfassungsstationen (3) in einem Verkehrsnetz (5), wobei jede Erfassungsstation mindestens einen Sensor zum Erfassen der Bilddaten der Verkehrsteilnehmer aufweist, wobei mindestens eine Auswertungsvorrichtung zum Auswerten der Bilddaten vorgesehen ist, sowie mindestens eine Kommunikationsverbindung zum Übertragen von Daten, wobei ein flüchtiger Speicher zum Speichern der aufgenommenen Bilddaten vorgesehen ist,
wobei eine Datenverarbeitungsvorrichtung dazu vorgesehen ist, die Datensätze verschiedener Erfassungsstationen zu vergleichen und bei einer Übereinstimmung der Merkmaldaten zweier Datensätze die Plausibilität zu ermitteln, dass die zwei Datensätze ein und demselben Verkehrsteilnehmer zugeordnet sind, wobei die Plausibilität unter Berücksichtigung von den Datensätzen zugeordneten Informationen über einen jeweiligen Ort und eine jeweilige Zeit des Erfassens der Bilddaten ermittelt wird und wobei bei einem ausreichenden Wert der ermittelten Plausibilität ein Bewegungsprofil (6) des Verkehrsteilnehmers (1) erstellt wird, und
wobei die Datenverarbeitungsvorrichtung dazu eingerichtet ist, die Plausibilität unter Berücksichtigung von den Datensätzen zugeordneten Informationen über eine Fahrtrichtung des Verkehrsteilnehmers während des Erfassens der Bilddaten zu ermitteln.

9. System nach Anspruch 8, wobei
eine zentrale Verarbeitungsstation (4) vorgesehen ist, wobei die zentrale Verarbeitungsstation über die Kommunikationsverbindung mit den Erfassungsstationen (3) verbunden ist und wobei die zentrale Verarbeitungsstation die Datenverarbeitungsvorrichtung aufweist.

10. System nach Anspruch 8, wobei
mehrere dezentrale Verarbeitungsstationen vorgesehen sind, wobei die dezentralen Verarbeitungsstationen über die Kommunikationsverbindung mit jeweils mindestens zwei der Erfassungsstationen verbunden sind und wobei die dezentralen Verarbeitungsstationen jeweils eine Datenverarbeitungsvorrichtung aufweisen.

11. System nach Anspruch 8, wobei
die Sensoren mindestens eine der folgenden Sensorarten umfassen: eine Kamera, ein 3D-Laserscanner, ein Radar.

12. Mehrdimensionales Verkehrsnetz mit einem System nach einem der Ansprüche 8 bis 11.

## Claims

1. Method for creating movement profiles of traffic participants in a traffic network (5) having more than two detection stations (3), wherein image data of the traffic participants (1) are captured by sensors of the detection stations and are evaluated by an evaluation device, wherein data sets comprising feature data of the traffic participants are created from the image data and wherein the data sets of different detection stations are compared, wherein, in the event of a correspondence of the feature data of two data sets, a plausibility of the two data sets being assigned to one and the same traffic participant is determined, taking into account information assigned to the data sets regarding a respective location and a respective time of capture of the image data, and wherein, in the event of a sufficient value of the determined plausibility, a movement profile (6) of the traffic participant (1) is created, **characterized in that** the plausibility is determined taking into account information assigned to the data sets regarding a direction of travel of the traffic participant during the capture of the image data.

2. Method according to claim 1, wherein the plausibility is determined taking into account a speed of the traffic participant by determining a first location at which the image data for a first of the two data sets was recorded and a second location at which the image data for a second of the two data sets was recorded, wherein a first time is determined, at which the image data for the first of the two data sets was recorded and a second time at which the image data for the second of the two data sets was recorded is determined, wherein the speed of the traffic participant is calculated from a distance between the first location and the second location and a time difference between the first time and the second time.

3. Method according to any one of the preceding claims, wherein the plausibility is determined taking into account a degree of correspondence of the feature data of the data sets.

4. Method according to claim 3, wherein the feature data is evaluated by means of weighting.

5. Method according to one of the preceding claims, wherein the data sets contain only such feature data of the traffic participants which enable a non-specific assignment of vehicles, wherein the feature data of the traffic participants which enable a non-specific assignment of vehicles include the vehicle model, a vehicle type, a lettering or graphical design or the vehicle colour.

6. Method according to any one of the preceding claims, wherein the data sets include at least one of the following feature data of the traffic participants: Vehicle model, vehicle type, lettering, graphical design, coding of a registration district, coding of a country of registration, vehicle colour.

7. Method according to one of the preceding claims, wherein all data sets for which no data set with correspondence feature data is found within a predetermined time are deleted.

8. System for generating movement profiles (6) of traffic participants (1) according to the method according to one of the preceding claims, comprising more than two detection stations (3) in a traffic network (5), wherein each detection station comprises at least one sensor for capturing the image data of the traffic participants, wherein at least one evaluation device is provided for evaluating the image data and at least one communication link for transmitting data, wherein a volatile memory is provided for storing the recorded image data, wherein a data processing device is provided for comparing the data sets of different detection stations and for determining plausibility in the event of correspondence between the feature data of two data sets, **characterised in that** the two data sets are assigned to one and the same traffic participant, wherein the plausibility is determined taking into account information assigned to the data sets regarding a respective location and a respective time of the capture of the image data and wherein a movement profile (6) of the traffic participant (1) is generated if the value of the determined plausibility is sufficient, and wherein the data processing device is set up to determine the plausibility taking into account information assigned to the data sets regarding a direction of travel of the traffic participant during the capture of the image data.

9. System according to claim 8, wherein a central processing station (4) is provided, wherein the central processing station is connected to the detection stations (3) via the communication link, and wherein the central processing station comprises the data processing device.

10. System according to claim 8, wherein a plurality of decentralised processing stations are provided, wherein the decentralised processing stations are each connected to at least two of the detection stations via the communication link, and wherein the decentralised processing stations each have a data processing device.

11. System according to claim 8, wherein the sensors comprise at least one of the following sensor types: a camera, a 3D laser scanner, a radar.

12. Multi-dimensional traffic network comprising a system according to any one of claims 8 to 11.

## Revendications

1. Procédé de création de profils de mouvement d'usagers de la route dans un réseau de trafic (5) comportant plus de deux stations de détection (3), dans lequel des données d'image des usagers de la route (1) sont détectées avec des capteurs des stations de détection et sont évaluées avec un dispositif d'évaluation, dans lequel des ensembles de données comprenant des données de caractéristiques des usagers de la route sont créés à partir des données d'image et dans lequel les ensembles de données de différentes stations de détection sont comparés, dans lequel, en cas de correspondance des données de caractéristiques de deux ensembles de données, une plausibilité du fait que les deux ensembles de données sont associés à un seul et même usager de la route est déterminée en tenant compte d'informations associées aux ensembles de données concernant un lieu respectif et un temps respectif de la détection des données d'image et dans lequel, en cas de valeur suffisante de la plausibilité déterminée, un profil de mouvement (6) de l'usager de la route (1) est créé, **caractérisé en ce que** la plausibilité est déterminée en tenant compte d'informations associées aux ensembles de données concernant un sens de circulation de l'usager de la route pendant la détection des données d'image.

2. Procédé selon la revendication 1, dans lequel la plausibilité est déterminée en tenant compte d'une vitesse de l'usager de la route, en déterminant un premier lieu auquel les données d'image pour un premier des deux ensembles de données ont été enregistrées et en déterminant un deuxième lieu auquel les données d'image pour un deuxième des deux ensembles de données ont été enregistrées, dans lequel un premier temps est déterminé, auquel les données d'image pour le premier des deux ensembles de données ont été enregistrées et un deuxième temps est déterminé, auquel les données d'image pour le deuxième des deux ensembles de données ont été enregistrées, dans lequel la vitesse de l'usager de la route est calculée à partir d'une distance entre le premier lieu et le deuxième lieu et d'une différence de temps entre le premier temps et le deuxième temps.

3. Procédé selon l'une des revendications précédentes, dans lequel la plausibilité est déterminée en tenant compte d'un degré de correspondance des données de caractéristiques des ensembles de données.

4. Procédé selon la revendication 3, dans lequel les données de caractéristiques sont évaluées à l'aide d'une pondération.

5. Procédé selon l'une des revendications précédentes, dans lequel les ensembles de données ne contiennent que des données de caractéristiques des usagers de la route de telle sorte qu'une association non spécifique de véhicules est rendue possible, dans lequel les données de caractéristiques des usagers de la route qui permettent une association non spécifique de véhicules comprennent le modèle de véhicule, un type de véhicule, un marquage ou une conception graphique ou la couleur du véhicule.

6. Procédé selon l'une des revendications précédentes, dans lequel les ensembles de données contiennent au moins l'une des données de caractéristiques suivantes des usagers de la route : modèle de véhicule, type de véhicule, marquage, conception graphique, codage d'une zone d'immatriculation, codage d'un pays d'immatriculation, couleur du véhicule.

7. Procédé selon l'une des revendications précédentes, dans lequel tous les ensembles de données, pour lesquels aucun autre ensemble de données avec des données de caractéristiques correspondantes n'est trouvé dans un temps prédéterminé, sont supprimés.

8. Système de création de profils de mouvement (6) d'usagers de la route (1) selon le procédé conformément à l'une des revendications précédentes, comportant plus de deux stations de détection (3) dans un réseau de trafic (5), dans lequel chaque station de détection comporte au moins un capteur pour détecter les données d'image des usagers de la route, dans lequel au moins un dispositif d'évaluation est prévu pour évaluer les données d'image, ainsi qu'au moins une liaison de communication pour transmettre des données, dans lequel une mémoire volatile est prévue pour mémoriser les données d'image enregistrées, dans lequel un dispositif de traitement de données est prévu pour comparer les ensembles de données de différentes stations de détection et, en cas de correspondance des données de caractéristiques de deux ensembles de données, pour déterminer la plausibilité du fait que les deux ensembles de données sont associés à un seul et même usager de la route, dans lequel la plausibilité est déterminée en tenant compte d'informations associées aux ensembles de données concernant un lieu respectif et un temps respectif de la détection des données d'image et dans lequel, en cas de valeur suffisante de la plausibilité déterminée, un profil de mouvement (6) de l'usager de la route (1) est créé, et dans lequel le dispositif de traitement de données est conçu pour déterminer la plausibilité en tenant compte d'informations associées aux ensembles de données concernant un sens de circulation de l'usager de la route pendant la détection des données d'image.

9. Système selon la revendication 8, dans lequel une station de traitement centrale (4) est prévue, dans lequel la station de traitement centrale est reliée aux stations de détection (3) par l'intermédiaire de la liaison de communication et dans lequel la station de traitement centrale comporte le dispositif de traitement de données.

10. Système selon la revendication 8, dans lequel plusieurs stations de traitement décentralisées sont prévues, dans lesquelles les stations de traitement décentralisées sont reliées respectivement à au moins deux des stations de détection par l'intermédiaire de la liaison de communication et dans lesquelles les stations de traitement décentralisées comportent chacune un dispositif de traitement de données.

11. Système selon la revendication 8, dans lequel les capteurs comprennent au moins l'un des types de capteurs suivants : une caméra, un scanner laser 3D, un radar.

12. Réseau de trafic multidimensionnel comprenant un système selon l'une des revendications 8 à 11.
